Europäisches Patentamt

European Patent Office

Office européen des brevets

(11) Publication number: **0 546 546 A1**

# EUROPEAN PATENT APPLICATION

(21) Application number: **92121072.0**

(22) Date of filing: **10.12.92**

(51) Int. Cl.5: **C08K 5/09**, C08L 23/00,
C08L 67/00, C08L 29/04

(30) Priority: **11.12.91 JP 327478/91**
**18.12.91 JP 334976/91**

(43) Date of publication of application:
**16.06.93 Bulletin 93/24**

(84) Designated Contracting States:
**DE FR GB**

(71) Applicant: **Toppan Printing Co., Ltd.**
**5-1, 1-chome, Taito**
**Taito-ku Tokyo(JP)**

(72) Inventor: **Masuda, Naoki, c/o Toppan Printing**
**Co.,Ltd.**
**5-1, Taito 1-chome**
**Taito-ku, Tokyo 110(JP)**
Inventor: **Sekine, Norimasa, c/o Toppan**
**Printing Co.,Ltd.**
**5-1, Taito 1-chome**
**Taito-ku, Tokyo 110(JP)**
Inventor: **Umeyama, Hiroshi, c/o Toppan**
**Printing Co.,Ltd.**
**5-1, Taito 1-chome**

**Taito-ku, Tokyo 110(JP)**
Inventor: **Nakamura, Keiko, c/o Toppan**
**Printing Co.,Ltd.**
**5-1, Taito 1-chome**
**Taito-ku, Tokyo 110(JP)**
Inventor: **Kato, Takeo, c/o Toppan Printing**
**Co.,Ltd.**
**5-1, Taito 1-chome**
**Taito-ku, Tokyo 110(JP)**
Inventor: **Katoh, Toshikazu, c/o Toppan**
**Printing Co.,Ltd.**
**5-1, Taito 1-chome**
**Taito-ku, Tokyo 110(JP)**
Inventor: **Tomatsuri, Takeo, c/o Toppan**
**Printing Co.,Ltd.**
**5-1, Taito 1-chome**
**Taito-ku, Tokyo 110(JP)**

(74) Representative: **Bühling, Gerhard, Dipl.-Chem.**
**et al**
**Patentanwaltsbüro Tiedtke-Bühling-Kinne &**
**Partner, Bavariaring 4**
**W-8000 München 2 (DE)**

(54) **Resin composition having oxygen barrier quality and process for producing the same.**

(57) The improved resin composition having oxygen barrier quality comprises a polyolefin, a thermoplastic resin and an oxidation catalyst that is contained either in both said polyolefin and said thermoplastic resin or in said polyolefin alone. This resin composition can be produced by a process comprising melt blending a polyolefin, a thermoplastic resin and an oxidation catalyst, or by a process in which a composition comprising a prelimiarily melt blended polyolefin and oxidation catalyst is dispersed in a thermoplastic resin. The resin composition thus produced needs to use a smaller amount of costly resin having oxygen barrier quality and yet exhibits satisfactory oxygen barrier quality.

## BACKGROUND OF THE INVENTION

This invention relates to a resin composition having oxygen barrier quality and a process for producing the same.

Thermoplastic resins can be shaped by various methods including melt extrusion, infection molding and blow molding and, hence, they are extensively used in packaging films, sheets, bottles, containers, etc. However, for the particular purpose of packaging contents such as food that dislike oxygen, thermoplastic resins are used in lamination with costly resins having oxygen barrier quality such as the saponified product of an ethylene-vinyl acetate copolymer and polyvinylidene chloride.

## SUMMARY OF THE INVENTION

The present invention has been accomplished under these circumstances and has as an object providing a resin composition that uses a smaller amount of the costly resin having oxygen barrier quality and which yet has satisfactory oxygen barrier quality. Another object of the present invention is to provide a process for producing said resin composition.

As a result of the intensive studies conducted in order to attain those objects, the present inventors found that the first object could be attained by a resin composition having oxygen barrier quality that comprised a polyolefin, a thermoplastic resin and an oxidation catalyst that was contained either in both said polyolefin and said thermoplastic resin or in said polyolefin alone.

The present inventors also found that the second object mentioned above could be attained by a process comprising melt blending a polyolefin, a thermoplastic resin and an oxidation catalyst, or by a process in which a composition comprising a preliminarily melt blended polyolefin and oxidation catalyst was dispersed in a thermoplastic resin.

## DETAILED DESCRIPTION OF THE INVENTION

The present invention is described below in detail.

Examples of the polyolefin that can be used in the present invention include polyethylenes such as low-density polyethylene, medium-density polyethylene and high-density polyethylene, homo polymers, or block or random copolymers of propylene, polybutene and ethylene-$\alpha$-olefin (C$\geq$3) copolymers. These polyolefins preferably contain an antioxidant catalyst in amounts not exceeding 500 ppm.

Examples of the thermoplastic resin that can be used in the present invention include homopolymers such as polyolefins, polyesters, polycarbonates, polymethyl methacrylate, polyacrylonitrile, polystyrenes, polyurethanes and polyamides, and copolymers such as the saponified product of an ethylene-vinyl acetate copolymer (hereunder abbreviated as "EVOH"). For assuring effective oxygen barrier quality, the EVOH preferably has an ethylene content of 22 - 48 mol%, with the degree of saponification being 99 - 100 mol%.

Specific examples of polyesters include: (1) the products of copolycondensation between dihydric alcohols and two or more dibasic acids chiefly composed of terephthalic acid; (2) the products of copolycondensation between terephthalic acid and two or more dihydric alcohols; and (3) the polymer alloys composed of modifying polyolefins and polyethylene terephthalate or the copolycondensate (1) or (2).

Exemplary dibasic acids that can be contained as a comonomer component for terephthalic acid include: aromatic dicarboxylic acids such as isophthalic acid, naphthalenedicarboxylic acid, diphenyldicarboxylic acid, diphenoxyethanedicarboxylic acid, diphenyletherdicarboxylic acid and diphenylsulfonedicarboxylic acid; alicyclic dicarboxylic acids such as hexahydroterephthalic acid and hexahydroisophthalic acid; aliphatic dicarboxylic acids such as adipic acid, sebasic acid and azelaic acid; and oxyacids such as p-$\beta$-hydroxyethoxybenzoic acid, p-oxybenzoic acid and $\epsilon$-oxycaproic acid.

Exemplary dihydric alcohols include glycols such as ethylene glycol, propylene glycol, 1,4-butanediol, 1,4-dicyclohexanedimethanol, trimethylene glycol, tetramethylene glycol, hexamethylene glycol, decamethylene glycol, neopentyl glycol, diethylene glycol, 1,1-cyclohexanedimethylol, 1,4-cyclohexanedimethylol, 2,2-bis(4-$\beta$-hydroxyethoxyphenyl)propane, bis-(4-$\beta$-hydroxyethoxyphenyl)-sulfonecyclohexanediol, 1,4-bis($\beta$-hydroxyethoxy)benzene and 1,3-bis($\beta$-hydroxyethoxy)benzene.

Exemplary modifying polyolefins include copolymers of ethylene and unsaturated carboxylic acids or esters thereof, and ionomers. Exemplary unsaturated carboxylic acids or esters thereof include acrylic acid, methacrylic acid, methyl acrylate, methyl methacrylate, ethyl acrylate and ethyl methacrylate. The copolymers of ethylene and unsaturated carboxylic acids or esters thereof preferably contain unsaturated carboxylic acids in amounts of 3 - 20 wt%; in case of esters, they are preferably contained in amounts of 1 - 20 wt%.

The polyolefins or thermoplastic resins to be used in the present may contain nucleating agents or various additives such as compatibilizers, lubricants, antiblocking agents, stabilisers, antifoggants and colorants. Exemplary compatibilizers include polyolefins modified by grafting maleic anhydride. Suitable nucleating agents are fine particulate inorganic materials having a particle size of 2 - 10 $\mu$m, as exemplified by carbon black, talc, gypsum, silica, alumina, calcium carbonate, titanium dioxide, graphite, a glass powder and a metal powder.

The oxidation catalyst to be used in the present invention may be of any type that promotes the oxidation of polyolefins in such a way that they react with the oxygen that would otherwise permeate through them, thereby lowering the permeability of oxygen so that the polyolefins will have better oxygen barrier quality. Preferred examples of such oxidation catalyst are metal catalysts that comprise compounds of transition metals. Transition metals would work as an oxidation catalyst as oxygen reacts with polyolefins in the process of transition of metal ions from an oxidized state to a reduced state or vice versa. Preferred transition metals include Co, Mn, Fe, Cu, Ni, Ti, V and Cr, with Co being particularly preferred. Compounds of those metals may be salts with organic acids. Exemplary salt forming organic acids include stearic acid, acetylacetonic acid, dimethyldithiocarbamic acid, linoleic acid, naphthenic acid, talloleic acid, oleic acid, resin acid and capric acid.

Aluminum (Al), Mg, Ca and Zn compounds can also be used as oxidation catalysts for various reasons such as hygienic, colorlessness and low price. The oxidation catalysts described above are contained in the resin composition in a weight of at least 10 ppm, preferably at least 100 ppm in terms of metal atom. The higher the concentration of such oxidation catalysts, the better the oxygen barrier quality that can be possessed by the resin composition. However, if the content of the oxidation catalysts is excessive, rapid absorption of oxygen may deteriorate the polyolefin, potentially leading to discoloration when it is dispersed in the thermoplastic resin. Hence, the oxidation catalyst is preferably contained in amounts that do not exceed 2000 ppm on the basis of the total resin composition.

The resin composition of the present invention which has oxygen barrier quality can be produced by melt blending the polyolefin, thermoplastic resin and the oxidation catalyst, or by dispersing an oxidation catalyst containing polyolefin in the thermoplastic resin. In the former method, a composition is obtained that contains the oxidation catalyst in both the polyolefin and the thermoplastic resin. In the latter method, there is obtained a composition that contains the oxidation catalyst in the polyolefin but not in the thermoplastic resin.

There is no particular limitation on the manner in which the thermoplastic resin is combined with the polyolefin. Hence, the polyolefin may be present in islands without exhibiting compatibility with the thermoplastic resin; even in this way, the polyolefin will react with the oxidation catalyst to absorb oxygen, thereby providing better oxygen barrier quality. To achieve such dispersion, the polyolefin is preferably mixed with the thermoplastic resin in proportions ranging from 1:100 to 100:100.

As described above, the resin composition of the present invention which has oxygen barrier quality can be produced by dispersing an oxidation catalyst containing polyolefin in the thermoplastic resin. To implment this process, the oxidation catalyst is prelimiarily melt blended with the polyolefin by a suitable means such as a twin-screw kneader; thereafter, the polyolefin composition which contains the oxidation catalyst is dispersed in the thermoplastic resin as it is processed into a suitable form of packaging material such as a film, a sheet or a container. The advantage of this process is that the preliminary melt blending of the oxidation catalyst and the polyolefin allows the former to be dispersed in the latter more effectively so that the efficiency of reaction in which the polyolefin absorbs oxygen is improved.

The oxidation catalyst to be used in the present invention is preferably selected from among salts of organic acids. Organic acids are conventionally used as lubricants and are capable of lowering the viscosity of polyolefins when they are processed into compositions. Stated more specifically, the viscosity of the composition comprising the oxidation catalyst and the polyolefin is sufficiently lowered to permit efficient dispersion in the thermoplastic resin. If desired, the compatibilizer already mentioned above may be contained in an amount ranging from 1 to 40 parts per 100 parts by weight of the thermoplastic resin with a view to achieving efficient dispersion.

All examples of the oxidation catalyst listed above are in the form of a powder. If the composition comprising the oxidation catalyst and the polyolefin may be worked into the form of resin pellets by a suitable means such as a twin-screw kneader extruder, with the resulting pellets being used as a master batch, this offers the advantage that a subsequent operation such as dispersing the pellets in the thermoplastic resin to produce a resin composition having oxygen barrier quality or processing said composition into a packaging material such as a film, a sheet or a container can be performed without letting the oxidation catalyst fly about.

The resin composition of the present invention which comprises the oxidation catalyst, the polyolefin and the thermoplastic resin can be shaped by thermal forming methods into sheets (films), containers and other packaging materials. For example, the resin composition may be shaped by melt extrusion into films, sheets, pipes, etc.; it may be shaped by injection molding into the form of a container; or it may be shaped by blow molding into a hollow container such as a bottle. Blow molding can be accomplished by one of two methods, i.e., "extrusion blow molding" in which a parison is shaped by extrusion molding and then blown into a hollow part, or "injection blow molding" in which a preform is shaped by injection molding and then blown into a hollow part.

When sheets are to be formed, their thickness is preferably in the range of 10 - 1000 $\mu$m. If desired, the sheets may be drawn to produce sheeting having oxygen barrier quality. Drawing may be uniaxial or biaxial. In the case of uniaxial drawing, the stretch ratio is preferably in the range of 1 - 10; in the case of biaxial drawing, the sheets may be stretched by a suitable means such as a twin-screw stretcher or an injection stretch former an a draw ratio of 1 - 10 in both the machine and transverse directions.

Packaging materials such as sheets and containers that are produced by shaping the resin composition of the present invention may be single-layered or in the form of a laminate with various other layers. In the case where the oxidation catalyst is a compound of transition metal and where the resin composition is to be used as a food packaging material or container, the inner surface is preferably lined with a transition metal free layer so as to avoid direct contact with the contents.

A preferred laminate is such that a layer of another thermoplastic resin such as one that does not contain an oxidation catalyst is formed on one or both sides of the shaped part of the resin composition of the present invention. Examples of such optional thermoplastic resins include polyesters, polyolefins, polyamides, polyvinyl chloride, polyvinylidene chloride, polyacrylonitrile, polycarbonates, and modified products of these resins.

Lamination of layers can be performed by various methods including the use of an adhesive, coextrusion molding, coinjection molding, coextrusion blow molding, and coinjection blow molding.

The resin composition of the present invention can be used in various applications as illustrated below. First, it may be used as a constituent material of containers for preserving substances such as food that will deteriorate easily upon exposure to oxygen. In this case, the inner surface of the container is desirably lined with an oxidation catalyst free resin layer so as to avoid direct contact between the contents such as food and the transition metal in the oxidation catalyst.

Second, the resin composition may be shaped into a sheet or a film so that it is used as a constituent material of bags, blister packs or the lid of a container. Third, the resin composition may be shaped into a pipe; in this case, both open ends of the pipe may be fitted with a metal lid to make a container. Fourth, the resin composition may be injection molded or blow molded to form parts that can be directly used as containers.

The mechanism by which the resin composition of the present invention is permitted to have better oxygen barrier quality may be explained as follows. The polyolefin is prone to form radicals during processing or storage under the action of light or heat in the presence of the oxidation catalyst; the radicals formed then react with aerial oxygen to yield peroxy radicals. The peroxy radicals will in turn react with the polyolefin to form a hydroperoxide and radicals. The hydroperoxide is decomposed into alkoxy radicals and hydroxy radicals. Upon further reaction with the polyolefin, more radicals will be produced. Thus, it is speculated that the resin composition of the present invention permits enhanced generation of radicals and that the resulting acceleration of the reaction in which the polyolefin absorbs oxygen due to the radical reaction leads to more consumption of aerial oxygen and, hence, improved oxygen barrier quality.

The following examples are provided for the purpose of further illustrating the present invention but are in no way to be taken as limiting.

Example 1

Two hundred ppm of Co (II) stearate was mixed with polypropylene B240 (product of Mitsui Petrochemical Industries, Ltd.; MI = 0.5; without antioxidant). The mixture was extrusion molded with a twin-screw extruder at an extrusion temperature of 220°C to form resin pellets. The pellets were dispersed in EVOH (available from Kuraray Co., Ltd. under the trade name "EVAL F101"; ethylene content, 32 mol%; 99% or more saponification) in a mixing ratio of 10: 90 (by weight) and the dispersion was extrusion molded at an extrusion temperature of 210°C to form a film in a thickness of 60 $\mu$m. An undrawn polypropylene film having a thickness of 50 $\mu$m was laminated on both sides of the film with a polyurethane based adhesive to produce a three-layered film.

Comparative Example 1

A three-layered film was produced as in Example 1 except that Co (II) stearate was not incorporated.

Comparative Example 2

EVOH (available form Kurary Co., Ltd. under the trade name "EVAL F101"; ethylene content, 32 mol%; 99% or more saponification) was extrusion molded at an extrusion temperature of 210°C to form a film in a thickness of 60 $\mu$m. It was processed as in Example 1 to produce a three-layered film.

The oxygen permeabilities of the three film samples were measured over time (O$_2$TR) and the results are shown in Table 1 below. Measurements were conducted with Mocon Ox-TRAN 10/ 50A (product of Modern Control Co.) at 25°C.

Table 1

| Run No. | O$_2$ TR (cc/m$^2$•day•atm) at 25°C | | |
|---|---|---|---|
| | 1 day | 14 day | 28 day |
| Example 1 | 0.48 | 0.37 | 0.24 |
| Comparative Example 1 | 0.52 | 0.51 | 0.53 |
| 2 | 0.48 | 0.49 | 0.48 |

As one can see from Table1, the film sample prepared in accordance with the present invention had excellent oxygen barrier quality since its oxygen permeability decreased with time.

Example 2

The procedure of Example 1 was repeated except that cobalt stearate used as an oxidation catalyst was replaced by aluminum stearate, zinc stearate, magnesium stearate, cobalt linoleate and cobalt naphthenate in the amounts shown in Table 2 below to prepare film samples A - E, respectively. The oxygen permeabilities of those samples were evaluated as in Example 1 and the results are shown in Table 2 together with the data for the sample of Comparative Example 1.

## Table 2

| Oxidation catalyst[*] | $O_2$ TR $(cc/m^2 \cdot day \cdot atm)$ at $25^0C$ | | |
|---|---|---|---|
| Type/concentration (ppm) | 1 day | 28 day | 84 day |
| A/1000 | 0.51 | 0.48 | 0.42 |
| B/2000 | 0.48 | 0.46 | 0.42 |
| C/1000 | 0.55 | 0.50 | 0.41 |
| D/200 | 0.59 | 0.43 | 0.39 |
| E/200 | 0.48 | 0.39 | 0.25 |
| Comparative Example 1 | 0.52 | 0.51 | 0.53 |

[*] A: aluminum stearate

B: zinc stearate

C: magnesium stearate

D: cobalt linoleate

E: cobalt naphthenate

As one can see from Table 2, good oxygen barrier quality could also be achieved even when other oxidation catalysts than cobalt stearate were used.

Example 3

Cobalt (II) stearate (200 ppm), polypropylene ("B240" of Mitsui Petrochemical Industries, Ltd.; MI = 0.5; without antioxidant) and EVOH ("EVAL F101" of Kuraray Co., Ltd.; ethylene content, 32 mol%; 99% or more saponification) were extrusion molded at an extrusion temperature of 210°C in a mixing ratio of 20:80 (by weight) to form a film in a thickness of 50 $\mu$m. An undrawn polypropylene film having a thickness of 50 $\mu$m was laminated on both sides of the film with a polyurethane based adhesive to produce a three-layered film.

Example 4

A three-layered film was prepared as in Example 3 except that the mixing ratio of polypropylene and EVOH was adjuxted to 5:95 (by weight).

Comparative Example 3

A three-layered film was prepared as in Example 3 except that Co (II) stearate was not incorporated.

Comparative Example 4

A three-layered film was prepared as in Example 4 except that Co (II) stearate was not incorporated.

Comparative Example 5

Cobalt (II) stearate (200 ppm) and EVOH ("EVAL F101" of Kuraray Co., Ltd.; ethylene content, 32 mol%; 99% or more saponification) were extrusion molded at an extrusion temperature of 210°C to form a film in a thickness of 50 $\mu$m. It was processed as in Example 3 to produce a three-layered film.

The oxygen permeabilities of the five film samples were measured over time ($O_2$ TR) by the same method as used in Example 1 and the results are shown in Table 3 below.

Table 3

| Run No. | $O_2$ TR (cc/m$^2$•day•atm) at 25°C | | |
|---|---|---|---|
| | 1 day | 14 day | 28 day |
| Example 3 | 0.56 | 0.33 | 0.26 |
| 4 | 0.39 | 0.32 | 0.25 |
| Comparative Example 3 | 13.12 | 9.21 | 11.03 |
| 4 | 0.82 | 0.81 | 0.79 |
| 5 | 0.54 | 0.53 | 0.50 |

As one can see from Table 3, the film samples prepared in accordance with the present invention had excellent oxygen barrier quality since their oxygen permeability decreased with time.

Example 5

The procedure of Example 3 was repeated except that cobalt stearate used as an oxidation catalyst was replaced by aluminum stearate, zinc stearate, magnesium stearate, cobalt linoleate and cobalt naphthenate in the amounts shown in Table 4 below to prepare multi-layered film samples. The oxygen permeabilities of those samples were evaluated as in Example 3 and the results are shown in Table 4 together with the data for Comparative Example 3 in which no oxidation catalyst was used.

Table 4

| Oxidation catalyst* | $O_2$ TR (cc/m$^2$·day·atm) at 25°C | | |
|---|---|---|---|
| Type/concentration (ppm) | 1 day | 14 day | 28 day |
| A/1000 | 0.57 | 0.49 | 0.45 |
| B/2000 | 0.55 | 0.48 | 0.44 |
| C/1000 | 0.55 | 0.52 | 0.42 |
| D/200 | 0.56 | 0.45 | 0.39 |
| E/200 | 0.54 | 0.34 | 0.28 |
| Comparative Example 3 | 13.12 | 9.21 | 11.03 |

*A: aluminum stearate

B: zinc stearate

C: magnesium stearate

D: cobalt linoleate

E: cobalt naphthenate

As one can see from Table 4, good oxygen barrier quality could be achieved even when other oxidation catalysts than cobalt stearate were used.

Example 6

Cobalt (II) stearate (200 ppm) was mixed with polypropylene B240 (product of Mitsui Petrochemical Industries, Ltd.: MI = 0.5; without antioxidant) and the mixture was extrusion molded with a twin-screw extruder at an extrusion temperature of 220°C to form resin pellets. The pellets were dispersed in a polyester (available from Mitsui-Dupont Co., Ltd. under the trade name "Sealer PT-X207") in a mixing ratio of 20:80 (by weight) and the dispersion was extrusion molded at an extrusion temperature of 280°C to form a film in a thickness of 300 $\mu$m.

Comparative Example 6

A film was produced as in Example 6 except that Co (II) stearate was not incorporated.

Comparative Example 7

A polyester (available from Mitsui-Dupont Co., Ltd. under the trade name "Sealer PT-X207") was extrusion molded at an extrusion temperature of 280°C to form a film in a thickness of 300 $\mu$m.

The oxygen permeabilities of the three film samples were measured over time ($O_2$ TR) by the same method as used in Example 1 and the results are shown in Table 5 below.

Table 5

| Run No. | $O_2$ TR (cc/m$^2$·day·atm) at 25°C | | |
|---|---|---|---|
| | 1 day | 28 day | 56 day |
| Example 6 | 18 | 11 | 3 |
| Comparative Example 6 | 16 | 15 | 15 |
| 7 | 10 | 9 | 10 |

As one can see from Table 5, the oxygen permeability of the comparative film samples hardly changed with time but, on the other hand, the oxygen permeability of the sample prepared in accordance with the present invention decreased with time. It was therefore clear that the film sample of Example 6 had excellent oxygen barrier quality.

Example 7

A two-layer film was prepared by laminating a biaxially drawn polyester film (OPET) in a thickness of 5.4 μm on one side of the film of Example 6 with a polyurethane based adhesive.

An OPET film was laminated on the films of Comparative Examples 6 and 7 as in Example 7 to prepare corresponding two-layer film samples (Comparative Examples 8 and 9). The three samples of two-layer film were evaluated as in Example 1 and the results are shown in Table 6 below.

Table 6

| Run No. | $O_2$ TR (cc/m$^2$·day·atm) at 25°C | | |
|---|---|---|---|
| | 1 day | 28 day | 56 day |
| Example 7 | 16 | 8 | 0.7 |
| Comparative Example 8 | 15 | 15 | 14 |
| 9 | 9 | 10 | 10 |

As one can see from Table 6, the oxygen permeability of the comparative two-layer film samples hardly changed with time but. on the other hand, the oxygen permeability of the sample prepared in accordance with the present invention decreased with time. It was therefore clear that the two-layer film sample of Example 7 had excellent oxygen barrier quality.

Example 8

The procedure of Example 6 was repeated except that cobalt stearate used as an oxidation catalyst was replaced by aluminum stearate, zinc stearate and magnesium stearate in the amounts shown in Table 7 below to prepare two-layered film samples. The oxygen permeabilityies of those samples were evaluated as in Example 1 and the results are shown in Table 7 together with the data for Comparative Example 6 in which no oxidation catalyst was used.

9

Table 7

| Oxidation catalyst[*] | $O_2$ TR $(cc/m^2 \cdot day \cdot atm)$ at $25^0C$ | | |
|---|---|---|---|
| Type/concentration (ppm) | 1 day | 28 day | 84 day |
| A/1000 | 18 | 12 | 9 |
| B/2000 | 16 | 12 | 10 |
| C/1000 | 16 | 13 | 11 |
| Comparative Example 6 | 16 | 15 | 15 |

*A: aluminum stearate

B: zinc stearate

C: magnesium stearate

As one can see from Table 7, good oxygen barrier quality could also be achieved even when oxidation catalysts other than cobalt stearate were used.

Example 9

Cobalt (II) stearate, a polyester (available from Mitsui-Dupont Co., Ltd. under the trade name "Sealer PT-X-207") and polypropylene (available from Mitsui Petrochemical Industries, Ltd. under the trade name "Hi-pole B240"; MI = 0.5; without antioxidant) were extrusion molded in a mixing ratio of $2 \times 10^{-1}$:99:1 (by weight) at an extrusion temperature of 280°C to form a film in a thickness of 300 $\mu$m.

An additional film was prepared as above except that Co (II) stearate was not incorporated (Comparative Example 10). Still another film 300 $\mu$m thick was prepared by extrusion molding a polyester (available from Mitsui-Dupont Co., Ltd. under the trade name "Sealer PT-X-207") at an extrusion temperature of 280°C (Comparative Example 11).

The oxygen permeabilities of the three film samples were measured over time as in Example 1, and the results are shown in Table 8 below.

Table 8

| Run No. | $O_2$ TR $(cc/m^2 \cdot day \cdot atm)$ at 25°C | | | |
|---|---|---|---|---|
| | 0 day | 14 day | 1 mo. | 2.mo. |
| Example 9 | 10.6 | 8.1 | 8.2 | 6.2 |
| Comparativ Example 10 | 12.6 | 9.2 | 9.1 | 8.5 |
| 11 | 10.1 | 9.8 | 9.8 | 9.7 |

As one can see from Table 8, the film sample of Example 9 had excellent oxygen barrier quality.

Example 10

Cobalt (II) stearate, a polyester (available from Mitsui-Dupont Co., Ltd. under the trade name "Sealer PT-X-207") and polypropylene (available from Mitsui Petrochemical Industries, Ltd. under the trade name "Hi-pole B240"; MI = 0.5; without antioxidant) were extrusion molded in a mixing ratio of $2 \times 10^{-1}$:90:10 (by weight) at an extrusion temperature of 280°C to form a film in a thickness of 300 $\mu$m.

An additional film was prepared as above except that Co (II) stearate was not incorporated (Comparative Example 12).

The oxygen permeabilities of the two film samples were measured over time as in Example 1 and the results are shown in Table 9 below together with the data for the sample of Comparative Example 11.

Table 9

| Run No. | $O_2$ TR (cc/m²•day•atm) at 25°C | | | |
|---|---|---|---|---|
| | 0 day | 14 day | 1 mo. | 2 mo. |
| Example 10 | 11.3 | 11.1 | 6.9 | 5.6 |
| Comparative Example 12 | 14.3 | 11.4 | 10.8 | 11.1 |
| 11 | 10.1 | 9.8 | 9.8 | 9.7 |

As one can see from Table 9, the film sample of Example 10 had excellent oxygen barrier quality.

Example 11

Cobalt (II) stearate, polyethylene (available from Mitsui Petrochemical Industries, Ltd. under the trade name "Milason 14P") and polypropylene (available from Mitsui Petrochemical Industries, Ltd. under the trade name "Hi-pole J600P"; without antioxidant) were extrusion molded in a mixing ratio of $2 \times 10^{-1}$:90:10 (by weight)at an extrusion temperature of 190°C to form a film in a thickness of 800 $\mu$m.

Example 12

A film was produced by repeating the procedure of Example 11 except that the mixing ratio of Co stearate, polyethylene and polypropylene was changed to $2 \times 10^{-1}$:80:20 (by weight).

Comparative Example 13

A polyethylene (available from Mitsui Petrochemical Industries, Ltd. under the trade name "Milason 14P") was extrusion molded at an extrusion temperature of 190°C to form a film in a thickness of 800 $\mu$m.

Comparative Example 14

A film was produced by repeating the procedure of Example 12 except that Co (II) stearate was not incorporated.

Example 13

Cobalt (II) stearate (200 ppm) and polypropylene (available from Mitsui Petrochemical Industries, Ltd. under the trade name "Hi-pole J600P"; without antioxidant) were mixed and the blend was extrusion molded with a twin-screw extruder at an extrusion temperature of 190°C to yield resin pellets. The pellets were dispersed in polyethylene (available from Mitsui Petrochemical Industries, Ltd. under the trade name "Milason 14P") in a mixing ratio of 10:90 (by weight) and the dispersion was extrusion molded at an extrusion temperature of 190°C to form a film in a thickness of 800 $\mu$m.

Example 14

A film was produced by repeating the procedure of Example 13 except that the resin pellets made of Co (II) stearate and polypropylene were mixed with polyethylene in a ratio of 20:80 (by weight).

The oxygen permeabilities of the six film samples were measured over time ($O_2$ TR) as in Example 1 and the results are shown in Table 10 below.

Table 10

| Run No. | $O_2$ TR (cc/m$^2$·day·atm) at 25°C | | |
|---|---|---|---|
| | 1 day | 14 day | 28day |
| Example 11 | 231 | 4.3 | 2.1 |
| 12 | 193 | 12 | 1.0 |
| 13 | 224 | 124 | 90 |
| 14 | 203 | 20 | 28 |
| Comparative Example 13 | 313 | 299 | 288 |
| 14 | 214 | 202 | 174 |

As one can see from Table 10, the film samples of the present invention had excellent oxygen barrier quality since their oxygen permeability decreased with time.

As described on the foregoing pages, the present invention provides thermoplastic resin compositions that need to use smaller amounts of expensive resins having oxygen barrier quality such as the saponified product of an ethylene-vinyl acetate copolymer and polyvinylidene chloride and which yet exhibit satisfactory oxygen barrier quality. The invention offers the added advantage of providing processes for producing such improved resin compositions.

The improved resin composition having oxygen barrier quality comprises a polyolefin, a thermoplastic resin and an oxidation catalyst that is contained either in both said polyolefin and said thermoplastic resin or in said polyolefin alone. This resin composition can be produced by a process comprising melt blending a polyolefin, a thermoplastic resin and an oxidation catalyst, or by a process in which a composition comprising a prelimiarily melt blended polyolefin and oxidation catalyst is dispersed in a thermoplastic resin. The resin composition thus produced needs to use a smaller amount of costly resin having oxygen barrier quality and yet exhibits satisfactory oxygen barrier quality.

**Claims**

1. A resin composition having oxygen barrier quality that comprises a polyolefin, a thermoplastic resin and an oxidation catalyst that is contained in both said polyolefin and said thermoplastic resin.

2. A resin composition having oxygen barrier quality that comprises a polyolefin, a thermoplastic resin and an oxidation catalyst that is contained in said polyolefin alone.

3. A resin composition according to claim 1 or 2 wherein said polyolefin and said thermoplastic resin are mixed in a ratio of 1:100 to 100:100.

4. A resin composition according to claim 1 or 2 wherein the oxidation catalyst is a compound of a transition metal.

5. A resin composition according to claim 4 wherein the compound of a transition metal is a salt with an organic acid.

6. A resin composition according to claim 4 or 5 wherein the transition metal is cobalt.

7. A resin composition according to claim 1 or 2 wherein the oxidation catalyst is a compound of aluminum, magnesium, calcium or zinc.

8. A resin composition according to claim 1 or 2 wherein the oxidation catalyst is contained in such an amount that a metal element is present in an amount of 10 to 2000 ppm on the basis of the total resin composition.

9. A resin composition according to claim 1 or 2 wherein said thermoplastic resin is a polyolefin.

10. A resin composition according to claim 1 or 2 wherein said thermoplastic resin is a polyester.

**11.** A resin composition according to claim 1 or 2 wherein said thermoplastic resin is the saponified product of an ethylene-vinyl acetate copolymer.

**12.** A process for producing a resin composition having oxygen barrier quality by melt blending a composition comprising a polyolefin, a thermoplastic resin and an oxidation catalyst.

**13.** A process for producing a resin composition having oxygen barrier quality by first melt blending a polyolefin and an oxidation catalyst and then dispersing the resulting composition in a thermoplastic resin.

European Patent
Office

**EUROPEAN SEARCH REPORT**

Application Number

EP  92 12 1072

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 451 762 (TOPPAN PRINTING CO., LTD.) <br> * page 3, line 42 - line 58; claims * <br> --- | 1-13 | C08K5/09 <br> C08L23/00 <br> C08L67/00 <br> C08L29/04 |
| X | EP-A-0 165 383 (KURARAY CO., LTD.) <br> * page 5, paragraph 3 - page 6, paragraph 1 * <br> * page 8, paragraph 2 * <br> * page 11, line 7 - line 10; claims * <br> --- | 1-13 | |
| Y | GB-A-2 244 488 (GREIF BROS. CORPORATION) <br> * page 1, paragraph 2; claims; examples * <br> --- | 1-13 | |
| Y | DATABASE WPIL <br> Section Ch, Week 9203, <br> Derwent Publications Ltd., London, GB; <br> Class A92, AN 92-020285 <br> & JP-A-3 269 044 (TOTZUBAN INSATZU KK) 29 November 1991 <br> * abstract * | 1-13 | |
| | ----- | | **TECHNICAL FIELDS SEARCHED (Int. Cl.5 )** <br><br> C08K |

The present search report has been drawn up for all claims

| Place of search | Date of completion of the search | Examiner |
|---|---|---|
| THE HAGUE | 03 MARCH 1993 | CLEMENTE GARCIA R. |